# EUROPEAN PATENT SPECIFICATION

(11) **EP 2 796 742 B1**
(45) Date of publication and mention of the grant of the patent: **06.12.2017**
(21) Application number: 14165723.9
(22) Date of filing: 24.04.2014
(51) Int. Cl.: F16D 55/228

(54) **Caliper body for vehicle disc brake**
Sattelkörper für Fahrzeugscheibenbremse
Corps d'étrier pour frein à disque de véhicule

(30) Priority: 24.04.2013 JP 2013090928
(43) Date of publication of application: 29.10.2014
(73) Proprietor: NISSIN KOGYO CO., LTD., Nagano, 389-0514 (JP)
(72) Inventor: Ota, Akira, Nagano, 389-0514 (JP); Takayanagi, Naoki, Nagano, 389-0514 (JP)
(74) Representative: Hoffmann Eitle

(56) References cited:
- EP-A1- 0 748 947
- FR-A1- 2 459 909
- JP-A- 2009 297 784

## Description

### BACKGROUND

### Technical Field

The invention relates to a caliper body for a vehicle disc brake and particularly relates to an opposite-piston radial-mount type caliper body in which a pair of acting portions are disposed across a disc rotor so as to be opposite to each other.

### Related Art

In an opposite-piston radial-mount type caliper body, a pair of acting portions are disposed across a disc rotor so as to be opposite to each other. Bolt insertion holes are formed at both-side portions, in a disc rotation direction, of one of the acting portions so as to pass therethrough in a disc rotor radial direction. Vehicle mounting bolts inserted into the bolt insertion holes are fastened to a bracket fixed to a vehicle body, to thereby attach the caliper body to the vehicle body. Dust seal mounting grooves to which dust seals are fitted are formed in inner peripheral surfaces of cylinder holes on an opening side thereof. Also, piston seal mounting grooves to which piston seals are fitted are formed in the inner peripheral surfaces of the cylinder holes so as to be closer to bottom portions of the cylinders than the dust seal grooves. The dust seals prevent dust from penetrating into the cylinder holes. When brake is released, the pistons are returned to an opposite side to the disc rotor by the piston seals (for example, see JP 2005-163810 A).

JP 2009-297784 A discloses a method for producing a piston of an opposite-type caliper body of a disk brake for a vehicle with a monocoque structure, but fails to disclose a center line of the piston seal mounting groove in a disc axis direction being located on a disc rotor side of center axes of the bolt insertion holes.

### SUMMARY

However, in the caliper body described in JP 2005-163810 A, widths, in a disc axis direction, of the piston seals which return the pistons to the opposite side to the disc rotor when the brake is released are relatively large. Also, the piston seals are formed in positions apart from the disc rotor. Therefore, it is difficult to reduce a size of the caliper body.

An object of the invention is to provide a caliper body for a vehicle disc brake having a short length in a disc axis direction and having a small size.

In order to achieve the above described objective, according to an aspect of the invention, there is provided a caliper body for a vehicle disc brake, wherein a pair of acting portions that are disposed at both-side portions of a disc rotor, respectively and that are respectively formed with cylinder holes to which pistons are inserted are connected by a bridge portion that straddles an outer periphery of the disc rotor, bolt insertion holes to which vehicle body attachment bolts are inserted are formed at both-side portions, in a disc rotation direction, of one of the acting portions, so as to pass therethrough in a disc radial direction, dust seal mounting grooves to which dust seals are fitted are formed in inner surfaces of the cylinder holes on an opening side thereof, piston seal mounting grooves to which piston seals are fitted are formed in the inner surfaces of the cylinder holes so as to be closer to a bottom portion of the cylinder hole than the dust seal mounting grooves, a center line of the piston seal mounting groove in a disc axis direction is located on a disc rotor side of center axes of the bolt insertion holes.

Also, it is preferable that the center axes of the bolt insertion holes are located on the disc rotor side of a center portion of a line extending in the disc axis direction and connecting an opening end of the cylinder hole and the bottom portion of the cylinder hole. Furthermore, it is preferable that widths of the piston seal mounting grooves are the same as or narrower than those of the dust seal mounting grooves. Also, it is preferable that the caliper body is of a monocoque type in which the pair of acting portions and the bridging portion are formed integrally.

With the above configuration, the center line of the piston seal mounting groove in the disc axis direction is located on the disc rotor side of the center axes of the bolt insertion holes. Thereby, a length of the caliper body in the disc axis direction can be shortened, so that a size of the caliper body can be reduced. Furthermore, since the entire piston seal mounting groove is disposed toward the disc rotor, the piston can be sealed at a closer position to the disc rotor, twisting of the piston can be prevented, and the piston can be slid more stably.

Also, the center axes of the bolt insertion holes are located on the disc rotor side of the center portion of the line extending in the disc axis direction and connecting the opening end of the cylinder hole and the bottom portion of the cylinder hole. Thereby, the caliper body can be attached to the vehicle body at a position near the disc rotor, and it can be prevented that a braking reaction force tilts or deforms the caliper body during braking.

Furthermore, the widths of the piston seal mounting grooves are the same as or narrower than those of the dust seal mounting grooves. Thereby, the length of the caliper body in the disc axis direction can be shortened, so that the size of the caliper body can be reduced.

Also, the caliper body is of the monocoque type in which the pair of acting portions and the bridging portion are formed integrally. Thereby, a rigidity of the caliper body can be ensured.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1 is a section view taken along a line I-I in Fig. 4;
Fig. 2 is a section view taken along a line II-II in Fig. 4;
Fig. 3 is a section view taken along a line III-III in Fig. 5;
Fig. 4 is a front view of a vehicle disc brake according to one exemplary embodiment of the invention; and
Fig. 5 is a plan view of the disc brake according to the exemplary embodiment.

### DETAILED DESCRIPTION

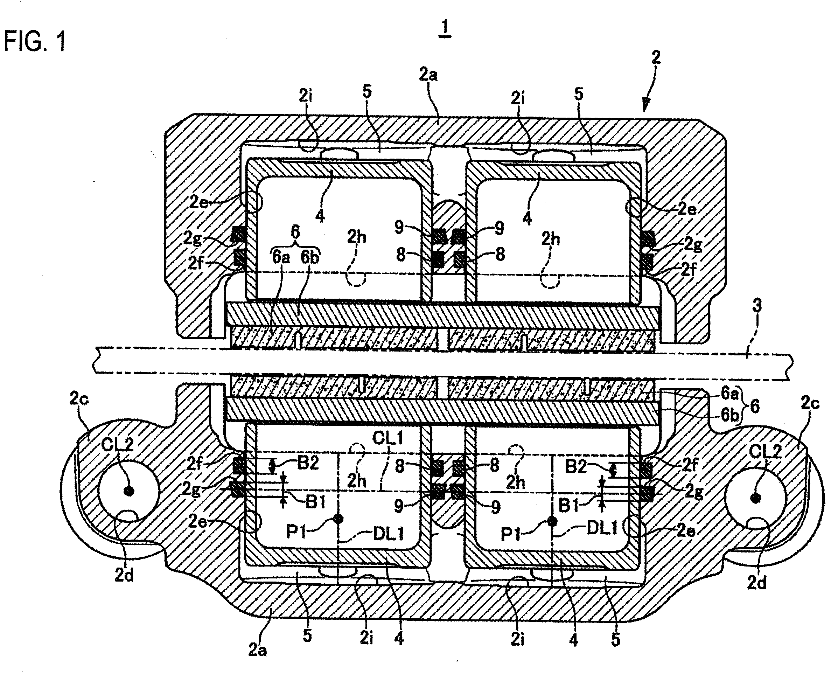

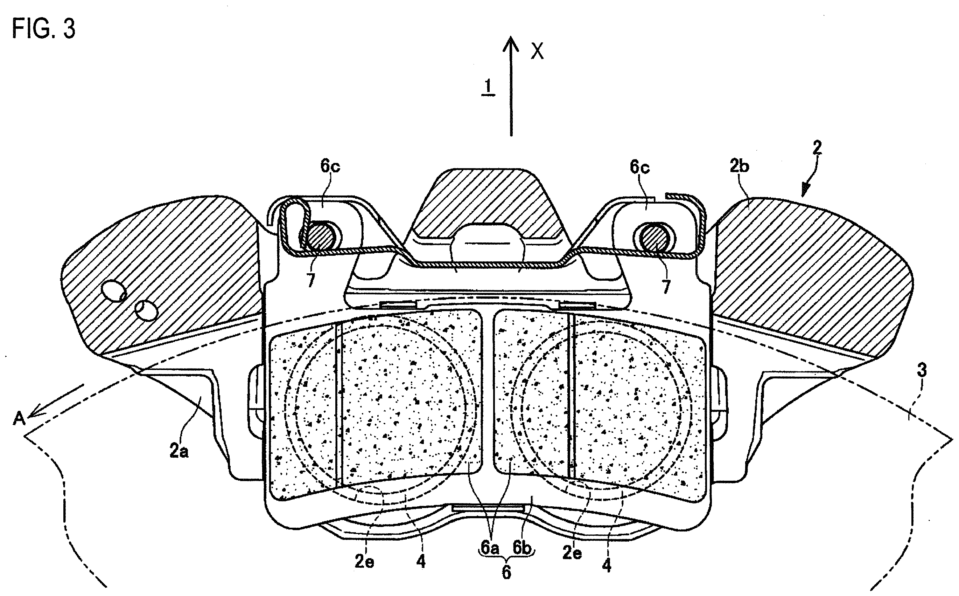

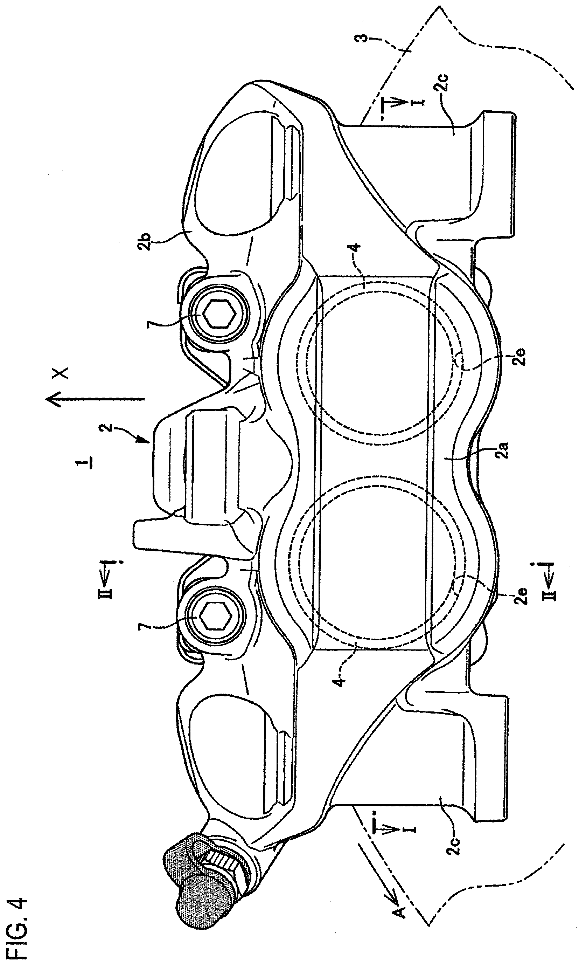

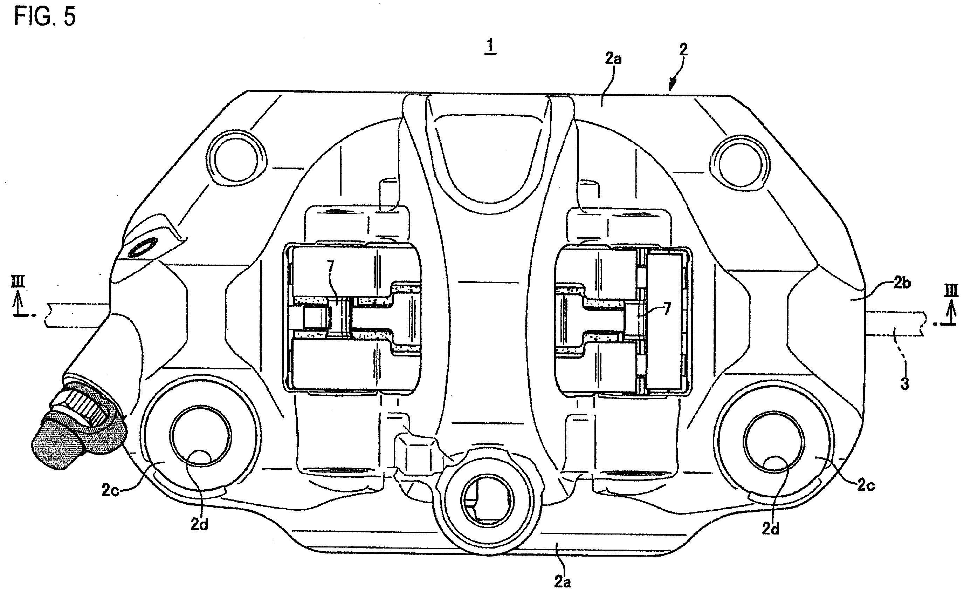

Figs. 1 to 5 show a vehicle disc brake according to one exemplary embodiment of the invention. An arrow "A" indicates a rotation direction of a disc rotor that rotates together with a wheel when a vehicle runs forward.

A caliper body 2 used in the vehicle disc brake 1 according to the exemplary embodiment is formed in a four-pot-opposite-piston type monocoque structure in which a pair of acting portions 2a, 2a are formed integrally with a bridge portion 2b. The acting portions 2a, 2a are disposed across a disc rotor 3, which rotate in the arrow "A" direction together with the wheel, so as to be opposite to each other. The bridge portion 2b straddles an outer periphery of the disc rotor 3. Attachment boss portions 2c, 2c protruding in a disc radial direction X are formed at both-side portions on a disc entrance side and a disc exit side, in the rotation direction of the disc rotor, of one of the acting portions 2a. Bolt insertion holes 2d, 2d are formed in the attachment boss portions 2c, 2c so as to pass therethrough in the disc radial direction X. Vehicle body attachment bolts (not shown) are inserted into the bolt insertion holes 2d, 2d and screwed into caliper attachment portions provided on a vehicle body side, to thereby attach the caliper body 2 to the vehicle body.

Two cylinder holes 2e, 2e are formed in each of the acting portions 2a, 2a. The cylinder holes 2e, 2e of one of the acting portions 2a, 2a are opposite to those of the other of the acting portions 2a, 2a. A piston 4 is housed in each cylinder 2e so as to be movable. A hydraulic pressure chamber 5 is formed between each cylinder 2e and the corresponding piston 4. A friction pad 6 is disposed between each pair of pistons 4 and the disc rotor 3.

Each friction pad 6 includes linings 6a and a metal back plate 6b. The linings 6a are in slide contact with side surfaces of the disc rotor 3. The linings 6a are attached to the back plates 6b. Suspension pieces 6c, 6c that protrude outward in the disc radial direction X are provided on the disc entrance side and the disc exit side of an outer surface, in the disc radial direction X, of each back plate 6a. Hanger pins 7, 7 extending in the disc axis direction are inserted into the suspension pieces 6c, 6c, to thereby suspend each friction pad 6 at both-side portions of the disc rotor 3 so that each friction pad 6 is movable in the disc axis direction.

Dust seal mounting grooves 2f are formed in inner peripheral surfaces of each cylinder hole 2e on an opening side thereof. Also, piston seal mounting grooves 2g are formed in the inner peripheral surfaces of each cylinder hole 2e so as to be closer to a bottom portion 2i of each cylinder hole 2e than the dust seal mounting grooves 2f. A dust seal 8 is fitted to each dust seal mounting groove 2f. The dust seals 8 are in slide contact with outer peripheral surfaces of the respective pistons 4 so as to be movable. The dust seals 8 prevent dust from penetrating into the cylinder holes 2e. A piston seal 9 is fitted to each piston seal mounting groove 2g. The piston seals 9 are liquid-tightly in slide contact with the outer peripheral surfaces of the respective pistons 4 so as to be movable. The piston seals 9 roll back the respective pistons 4 by their restoring forces.

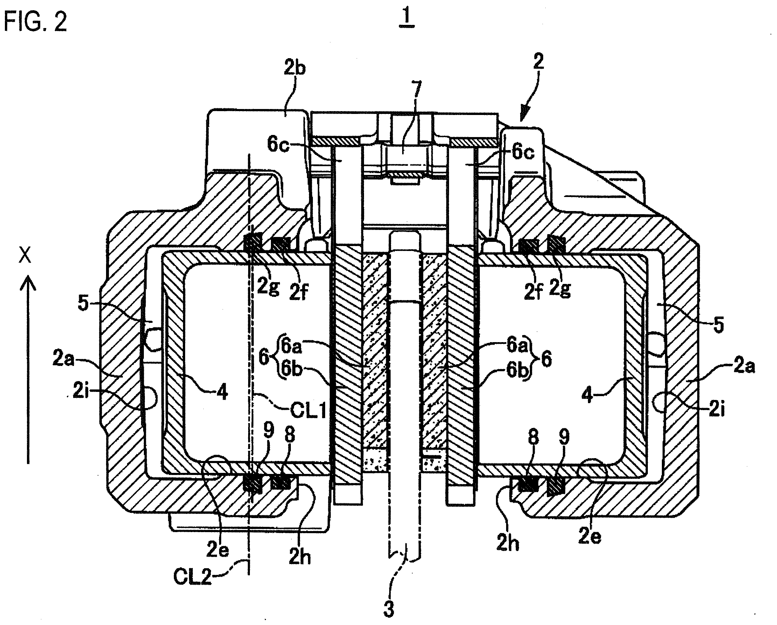

As shown in Figs. 1 and 2, center lines CL1 of the piston seal mounting grooves 2g, in the disc axis direction, formed in the one of the acting portions 2a, 2a (the acting portion 2a on the both sides of which the attachment boss portions 2c, 2c are provided) are located on the disc rotor 3 side of central axes CL2 of the bolt insertion holes 2d. Also, as shown in Fig. 1, the center axes CL2 of the bolt insertion holes 2d are located on the disc rotor 3 side of center portions PI of lines DL1 each extending in the disc axis direction and connecting an opening end 2h of the cylinder hole 2e and a bottom portion 2i of the cylinder hole 2e. Furthermore, groove widths B1 (widths in the disc axis direction) of the piston seal mounting grooves 2g are the same as groove widths B2 (widths in the disc axis direction) of the dust seal mounting grooves 2f.

Since the exemplary embodiment is configured as described above, a length of the caliper body 2 in the disc axis direction can be shortened, so that a size of the caliper body 2 can be reduced. Also, the center lines CL1 of the piston seal mounting grooves 2g in the disc axis direction are located on the disc rotor 3 side of the central axes CL2 of the bolt insertion holes 2d. Therefore, the entire piston seal mounting grooves 2g are disposed toward the disc rotor 3, the pistons 4 can be sealed at positions closer to the disc rotor 3, twisting of the pistons 4 can be prevented, and the pistons 4 can be slid more stably. Also, the center axes CL2 of the bolt insertion holes 2d are located on the disc rotor 3 side of the center portions P1 of the lines DL1 each extending in the disc axis direction and connecting the opening end 2h of the cylinder hole 2e and the bottom portion 2i of the cylinder hole 2e. Thereby, the caliper body 2 can be attached to the vehicle body at a position near the disc rotor 3, and it can be prevented that a braking reaction force tilts or deforms the caliper body 2 during braking. Furthermore, since the pair of acting portions 2a, 2a and bridging portion 2b of the caliper body 2 are formed integrally, the rigidity of the caliper body 2 can be ensured.

In the above described exemplary embodiment, the groove widths (widths in the disc axis direction) of the piston seal mounting grooves are the same as the groove widths (widths in the disc axis direction) of the dust seal mounting grooves. However, the invention is not limited thereto. The groove width of the piston seal mounting groove may be wider or narrower than that of the dust seal mounting groove. Also, the number of cylinder holes may be chosen arbitrarily. Furthermore, the invention is not limited to the caliper body having the opposite-piston type monocoque structure. The invention is applicable to an opposite-piston divided type caliper.

## Claims

1. A caliper body (2) for a vehicle disc brake, wherein
a pair of acting portions (2a) that are disposed at both-side portions of a disc rotor (3), respectively and that are respectively formed with cylinder holes (2e) to which pistons (4) are inserted are connected by a bridge portion (2b) that straddles an outer periphery of the disc rotor (3),
bolt insertion holes (2d) to which vehicle body attachment bolts are inserted are formed at both-side portions, in a disc rotation direction (A), of one of the acting portions (2a), so as to pass therethrough in a disc radial direction (X),
dust seal mounting grooves (2f) to which dust seals (8) are fitted are formed in inner surfaces of the cylinder holes (2e) on an opening side thereof,
piston seal mounting grooves (2g) to which piston seals (9) are fitted are formed in the inner surfaces of the cylinder holes (2e) so as to be closer to a bottom portion (2i) of the cylinder hole (2e) than the dust seal mounting grooves (2f),
a center line (CL1) of the piston seal mounting groove (2g) in a disc axis direction is located on a disc rotor side of center axes (CL2) of the bolt insertion holes (2d).

2. The caliper body according to claim 1, wherein the center axes (CL2) of the bolt insertion holes (2d) are located on the disc rotor side of a center portion (P1) of a line extending in the disc axis direction and connecting an opening end (2h) of the cylinder hole (2e) and the bottom portion (2i) of the cylinder hole (2e).

3. The caliper body according to any one of claims 1 to 2, wherein widths (B2) of the piston seal mounting grooves (2g) are the same as or narrower than those (B1) of the dust seal mounting grooves (2f).

4. The caliper body according to any one of claims 1 to 3, wherein the caliper body is of a monocoque type in which the pair of acting portions (2a) and the bridging portion (2b) are formed integrally.

## Patentansprüche

1. Bremssattelkörper (2) für eine Fahrzeugscheibenbremse, wobei
ein Paar Wirkabschnitte (2a), die jeweils auf beidseitigen Abschnitten eines Scheibenrotors (3) angeordnet sind und die jeweils mit Zylinderlöchern (2e) ausgebildet sind, in die Kolben (4) eingeführt sind, durch einen Brückenabschnitt (2b) verbunden sind, der einen Außenrandbereich des Scheibenrotors (3) überspannt,
Bolzeneinschublöcher (2d), in die Fahrzeugkarosseriebefestigungsbolzen eingeschoben sind, in einer Scheibendrehrichtung (A) auf beidseitigen Abschnitten von einem der Wirkabschnitte (2a) ausgebildet sind, um in einer radialen Richtung (X) der Scheibe durch diese hindurchzulaufen,
Staubdichtungsanbringnuten (2f), in die Staubdichtungen (8) eingepasst sind, in inneren Oberflächen der Zylinderlöcher (2e) auf einer Öffnungsseite davon ausgebildet sind,
Kolbendichtungsanbringnuten (2g), in die Kolbendichtungen (9) eingepasst sind, in den inneren Oberflächen der Zylinderlöcher (2e) ausgebildet sind, um näher an einem Bodenabschnitt (2i) des Zylinderlochs (2e) zu sein als die Staubdichtungsanbringnuten (2f),
sich eine Mittellinie (CL1) der Kolbendichtungsanbringnut (2g) in einer Scheibenachsenrichtung auf einer Scheibenrotorseite der Mittelachsen (CL2) der Bolzeneinschublöcher (2d) befindet.

2. Bremssattelkörper nach Anspruch 1, wobei sich die Mittelachsen (CL2) der Bolzeneinschublöcher (2d) auf der Scheibenrotorseite eines Mittelabschnitts (P1) einer Linie befinden, die sich in der Scheibenachsenrichtung erstreckt und ein Öffnungsende (2h) des Zylinderlochs (2e) und den Bodenabschnitt (2i) des Zylinderlochs (2e) verbindet.

3. Bremssattelkörper nach einem der Ansprüche 1 und 2, wobei die Breiten (B2) der Kolbendichtungsanbringnuten (2g) gleich oder schmäler sind als jene (B1) der Staubdichtungsanbringnuten (2f).

4. Bremssattelkörper nach einem der Ansprüche 1 bis 3, wobei der Bremssattelkörper von einem Typ Monocoque ist, bei dem das Paar Wirkabschnitte (2a) und der Brückenabschnitt (2b) ganzheitlich ausgebildet sind.

## Revendications

1. Corps d'étrier (2) pour un frein à disque de véhicule, dans lequel
un couple de portions d'actionnement (2a) qui sont respectivement disposées au niveau des deux portions latérales d'un rotor de disque (3), et qui sont respectivement formées avec des trous de cylindre (2e) dans lesquels des pistons (4) sont insérés, sont reliés par une portion de pont (2b) qui chevauche une périphérie extérieure du rotor de disque (3),
des trous d'insertion de boulon (2d), dans lesquels des boulons d'attache de carrosserie de véhicule sont insérés, sont formés au niveau des deux portions latérales, dans un sens de rotation de disque (A), d'une des portions d'actionnement (2a), afin de passer à travers ces derniers dans une direction radiale de disque (X),
des rainures de montage de joint anti-poussière (2f), dans lesquelles des joints anti-poussière (8) sont ajustés, sont formées dans des surfaces intérieures des trous de cylindre (2e) sur un côté d'ouverture de celles-ci,
des rainures de montage de joint de piston (2g), dans lesquelles des joints de piston (9) sont ajustés, sont formées dans les surfaces intérieures des trous de cylindre (2e) afin d'être plus près d'une portion de fond (2i) du trou de cylindre (2e) que les rainures de montage de joint anti-poussière (2f),
une ligne centrale (CL1) de la rainure de montage de joint de piston (2g) dans une direction axiale de disque est située sur un côté de rotor de disque d'axes centraux (CL2) des trous d'insertion de boulon (2d).

2. Corps d'étrier selon la revendication 1, dans lequel les axes centraux (CL2) des trous d'insertion de boulon (2d) sont situés sur le côté de rotor de disque d'une portion centrale (P1) d'une ligne s'étendant dans la direction axiale de disque et reliant une extrémité ouverte (2b) du trou de cylindre (2e) et la portion de fond (2i) du trou de cylindre (2e).

3. Corps d'étrier selon l'une quelconque des revendications 1 à 2, dans lequel des largeurs (B2) des rainures de montage de joint de piston (2g) sont les mêmes ou plus étroites que celles (B1) des rainures de montage de joint anti-poussière (2f).

4. Corps d'étrier selon l'une quelconque des revendications 1 à 3, dans lequel le corps d'étrier est d'un type monocoque dans lequel le couple de portions d'actionnement (2a) et la portion de pont (2b) sont formés d'un seul tenant.
